# EUROPEAN PATENT APPLICATION

(11) **EP 3 113 485 A1**
(43) Date of publication of application: **04.01.2017**
(21) Application number: 16000092.3
(22) Date of filing: 15.01.2016
(51) Int. Cl.: H04N 5/247, H04N 5/262, H04N 7/18, H04N 5/232, H04N 13/02

(54) **MOBILE TERMINAL AND METHOD FOR CONTROLLING THE SAME**

(30) Priority: 03.07.2015 KR 20150095421
(71) Applicant: LG Electronics Inc., Seoul 07336 (KR)
(72) Inventor: CHO, Taehoon, 06772 Seoul (KR); IM, Soungmin, 06772 Seoul (KR)
(74) Representative: Beyer, Andreas

(57) **Abstract**

The present invention relates to a mobile terminal allowing for image processing, and a method for controlling the same. A mobile terminal according to the present invention includes a wireless communication unit to transmit a first video of a specific object captured with a first capture setting value, to an external server or at least one external terminal, and receive a plurality of videos of the specific object captured with different capture setting values different from the first capture setting value, from the external server or the external terminal, a display unit to output a plurality of objects corresponding to the plurality of videos, and a controller to produce a merged video by merging a selected video corresponding to at least one object with the first video, in response to a user input for selecting the at least one object from the plurality of objects, and output the merged video on the display unit, based on a preset user input.

## Description

### BACKGROUND OF THE INVENTION

### 1. Field of the Invention

This specification relates to a mobile terminal capable of allowing for image processing, and a method for controlling the same.

### 2. Background of the Invention

Terminals may be divided into mobile/portable terminals and stationary terminals according to their mobility. Also, the mobile terminals may be classified into handheld terminals and vehicle mount terminals according to whether or not a user can directly carry.

Mobile terminals have become increasingly more functional. Examples of such functions include data and voice communications, capturing images and video via a camera, recording audio, playing music files via a speaker system, and displaying images and video on a display. Some mobile terminals include additional functionality which supports game playing, while other terminals are configured as multimedia players. Specifically, in recent time, mobile terminals can receive broadcast and multicast signals to allow viewing of video or television programs.

As it becomes multifunctional, a mobile terminal can be allowed to capture still images or moving images, play music or video files, play games, receive broadcast and the like, so as to be implemented as an integrated multimedia player.

Meanwhile, when videos of the same subject which are captured at different angles and distances are provided along with a video of the same subject captured by a terminal, the subject can be checked in more detail. Efforts are ongoing to support and increase the functionality of mobile terminals. Such efforts include software and hardware improvements, as well as changes and improvements in the structural components.

### SUMMARY OF THE INVENTION

Therefore, to solve the aforementioned problems and other drawbacks, an aspect of the detailed description is to provide a mobile terminal, capable of checking a subject (or an object) at various angels and distances, and a method for controlling the same.

To achieve these and other advantages and in accordance with the purpose of this specification, as embodied and broadly described herein, there is provided a mobile terminal including a wireless communication unit that is configured to transmit a first video, obtained by capturing a specific object with a first capture setting value, to an external server or at least one external terminal, and receive a plurality of videos from the external server or the at least one external terminal, the plurality of videos being obtained by capturing the specific object with capture setting values different from the first capture setting value and different from one another, a display unit that is configured to output a plurality of objects corresponding to the plurality of videos, and a controller that is configured to produce a merged video by merging at least one selected video corresponding to at least one selected object with the first video, in response to a user input for selecting the at least one object from the plurality of objects, and output the merged video on the display unit, based on an applied preset user input.

In an exemplary embodiment, the controller may produce the merged video based on the capture setting value corresponding to each of the at least one selected video and the first capture setting value corresponding to the first video.

In an exemplary embodiment, the capture setting value may include an angle value and a distance value at which the specific object has been captured.

In an exemplary embodiment, the controller may produce the merged video after setting each size of the specific object included in the selected video and the first video to the same size.

In an exemplary embodiment, the controller may calculate a specific angle value and a specific distance value based on the angle value and the distance value, and produce a specific video corresponding to the specific angle value and the specific distance value by a preset method.

In an exemplary embodiment, the controller may produce the merged video by merging the specific image, the selected video and the first video.

In an exemplary embodiment, the controller may produce the specific video corresponding to the specific angle value and the specific distance value by image morphing.

In an exemplary embodiment, the controller may output the merged video on the display unit in a manner that at least one of the angel value and the distance value at which the specific object has been captured is changed in response to a preset user input.

In an exemplary embodiment, the controller may output the merged video by changing a sound value of the merged video, in response to the change in the at least one of the angle value and the distance value.

In an exemplary embodiment, the controller may output both of the first video and the merged video on the display unit in a simultaneous manner.

To achieve these and other advantages and in accordance with the purpose of this specification, as embodied and broadly described herein, there is provided a method for controlling a mobile terminal, the method including (a) transmitting a first video obtained by capturing a specific object with a first capture setting value to an external server or at least one external terminal, and receiving a plurality of videos from the external server or the at least one external terminal, the plurality of videos being obtained by capturing the specific object with capture setting values different from the first capture setting value and different from one another, (b) outputting a plurality of objects corresponding to the plurality of videos on a display unit, (c) producing a merged video by merging at least one selected video corresponding to at least one selected object and the first video, in response to a user input for selecting the at least one object from the plurality of objects, and (d) outputting the merged video on the display unit, based on an applied preset user input

In an exemplary embodiment, the step (c) may include producing the merged video based on the capture setting value corresponding to each of the at least one selected video and the first capture setting value corresponding to the first video.

In an exemplary embodiment, the capture setting value may include an angle value and a distance value at which the specific object has been captured.

In an exemplary embodiment, the step (c) may include producing the merged video after setting each size of the specific object included in the selected video and the first video to the same size.

In an exemplary embodiment, the step (c) may include calculating a specific angle value and a specific distance value based on the angle value and the distance value, and producing a specific video corresponding to the specific angle value and the specific distance value by a preset method.

In an exemplary embodiment, the step (c) may include producing the merged video by merging the specific image, the selected video and the first video.

In an exemplary embodiment, the step (c) may include producing the specific video corresponding to the specific angle value and the specific distance value by image morphing.

In an exemplary embodiment, the step (d) may include outputting the merged video on the display unit in a manner that at least one of the angel value and the distance value at which the specific object has been captured is changed in response to a preset user input.

In an exemplary embodiment, the step (d) may include outputting the merged video by changing a sound value of the merged video, in response to the change in the at least one of the angle value and the distance value.

In an exemplary embodiment, the step (d) may include outputting both of the first video and the merged video on the display unit in a simultaneous manner.

Further scope of applicability of the present application will become more apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from the detailed description.

### BRIEF DESCRIPTION OF THE DRAWINGS

The accompanying drawings, which are included to provide a further understanding of the invention and are incorporated in and constitute a part of this specification, illustrate exemplary embodiments and together with the description serve to explain the principles of the invention.

In the drawings:
- FIG. 1A: is a block diagram of a mobile terminal in accordance with the present invention;
- FIGS. 1B and 1C: are conceptual views illustrating one example of the mobile terminal, viewed from different directions;
- FIG. 2: is a flowchart illustrating a method for controlling a mobile terminal in accordance with the present invention;
- FIGS. 3A and 3B: are conceptual views illustrating an exemplary embodiment of a plurality of terminals which capture the same subject at various angles;
- FIG. 4: is a conceptual view illustrating an exemplary embodiment of a user interface output at the moment of generating a merged video;
- FIG. 5: is a conceptual view illustrating an exemplary embodiment of changing an output direction of a subject by applying a preset gesture;
- FIG. 6: is a conceptual view illustrating an exemplary embodiment of changing an output direction of a subject by applying a preset touch input;
- FIG. 7: is a conceptual view illustrating an exemplary embodiment of notifying a presence of a video captured in a different direction;
- FIG. 8: is a conceptual view illustrating an exemplary embodiment of a user interface according to a method for controlling a mobile terminal in accordance with the present invention; and
- FIG. 9: is a conceptual view illustrating an exemplary embodiment of simultaneously outputting an uploaded video and a merged video.

### DETAILED DESCRIPTION OF THE INVENTION

Description will now be given in detail according to exemplary embodiments disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In describing the present disclosure, moreover, the detailed description will be omitted when a specific description for publicly known technologies to which the invention pertains is judged to obscure the gist of the present disclosure. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

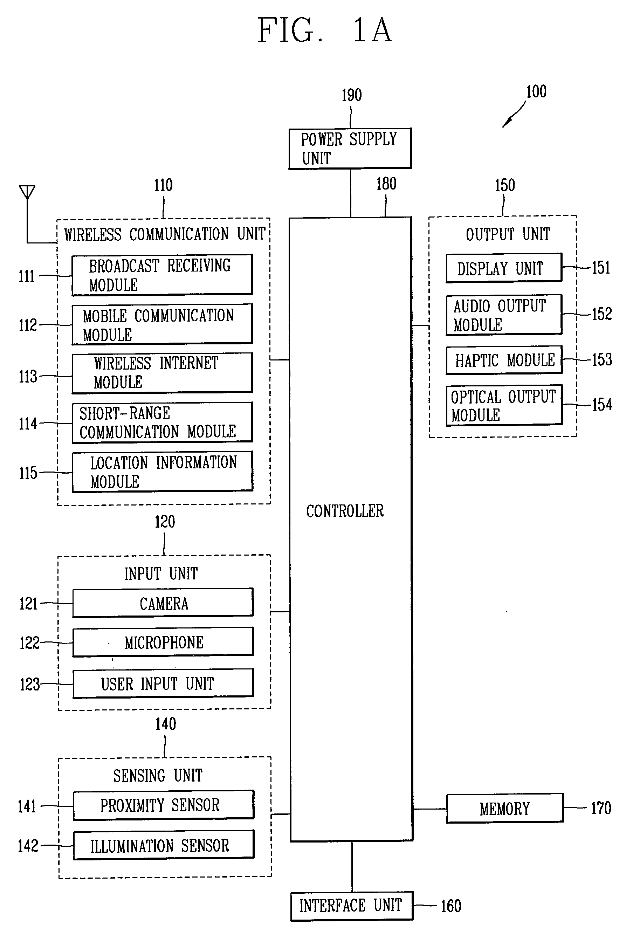

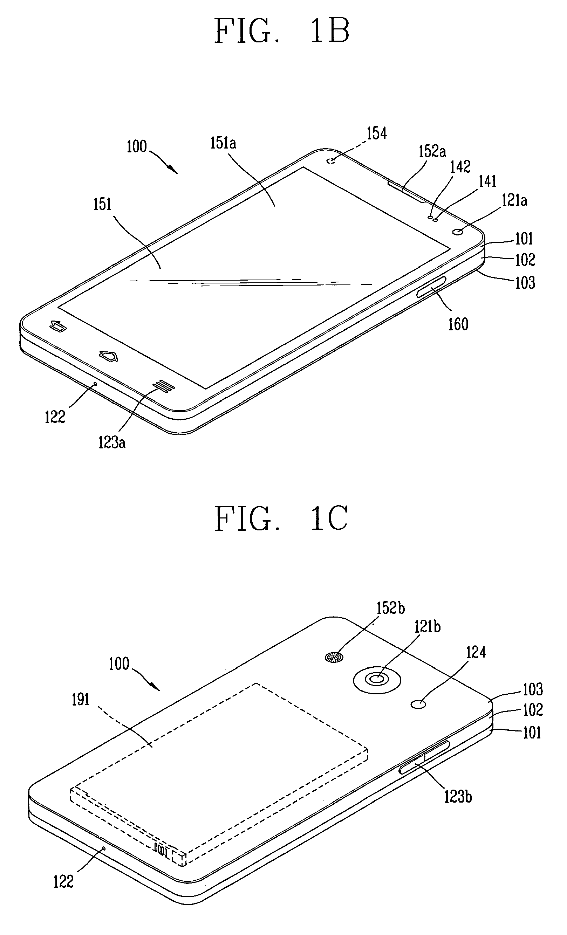

Reference is now made to FIGS. 1A to 1C, where FIG. 1A is a block diagram of a mobile terminal in accordance with the present disclosure, and FIGS. 1B and 1C are conceptual views of one example of the mobile terminal, viewed from different directions.

The mobile terminal 100 is shown having components such as a wireless communication unit 110, an input unit 120, a sensing unit 140, an output unit 150, an interface unit 160, a memory 170, a controller 180, and a power supply unit 190. It is understood that implementing all of the illustrated components is not a requirement, and that greater or fewer components may alternatively be implemented.

In more detail, the wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks.

The wireless communication unit 110 includes one or more of a broadcast receiving module 111, a mobile communication module 112, a wireless Internet module 113, a short-range communication module 114, and a location information module 115.

The input unit 120 includes a camera 121 or an image input unit for obtaining images or video, a microphone 122, which is one type of audio input device for inputting an audio signal, and a user input unit 123 (for example, a touch key, a mechanical key, and the like) for allowing a user to input information. Data (for example, audio, video, image, and the like) is obtained by the input unit 120 and may be analyzed and processed according to user commands.

The sensing unit 140 is typically implemented using one or more sensors configured to sense internal information of the mobile terminal, the surrounding environment of the mobile terminal, user information, and the like. For example, the sensing unit 140 may include at least one of a proximity sensor 141, an illumination sensor 142, a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like). The mobile terminal disclosed herein may be configured to utilize information obtained from one or more sensors of the sensing unit 140, and combinations thereof.

The output unit 150 is typically configured to output various types of information, such as audio, video, tactile output, and the like. The output unit 150 is shown having at least one of a display unit 151, an audio output module 152, a haptic module 153, and an optical output module 154. The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs.

The controller 180 may provide or process information or functions appropriate for a user by processing signals, data, information and the like, which are input or output by the aforementioned various components, or activating application programs stored in the memory 170.

Also, the controller 180 controls some or all of the components illustrated in FIG. 1A according to the execution of an application program that have been stored in the memory 170. In addition, the controller 180 may control at least two of those components included in the mobile terminal to activate the application program.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

At least part of the components may cooperatively operate to implement an operation, a control or a control method of a mobile terminal according to various embodiments disclosed herein. Also, the operation, the control or the control method of the mobile terminal may be implemented on the mobile terminal by an activation of at least one application program stored in the memory 170.

Hereinafter, description will be given in more detail of the aforementioned components with reference to FIG. 1A, prior to describing various embodiments implemented through the mobile terminal 100.

First, regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000(Code Division Multi Access 2000), Enhanced Voice-Date Optimized or Enhanced Voice-Data Only (EV-DO), Wideband CDMA (WCDMA), High Speed Downlink Packet access (HSDPA), High Speed Uplink Packet Access (HSUPA), Long Term Evolution (LTE), LTE-advanced (LTE-A) and the like).

Examples of the wireless signals include audio call signals, video (telephony) call signals, or various formats of data to support communication of text and multimedia messages.

The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), High Speed Uplink Packet Access (HSUPA), Long Term Evolution (LTE), LTE-advanced (LTE-A) and the like. The wireless Internet module 113 may transmit/receive data according to one or more of such wireless Internet technologies, and other Internet technologies as well.

In some embodiments, when the wireless Internet access is implemented according to, for example, WiBro, HSDPA, HSUPA, GSM, CDMA, WCDMA, LTE, LET-A, and the like, as part of a mobile communication network, the wireless Internet module 113 may be understood as a type of the mobile communication module 112.

The short-range communication module 114 is configured to facilitate short-range communications. Suitable technologies for implementing such short-range communications include BLUETOOTH™, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB(Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

Here, another mobile terminal (which may be configured similarly to mobile terminal 100) may be a wearable device, for example, a smart watch, a smart glass or a head mounted display (HMD), which is able to exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of at least part of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position (or current position) of the mobile terminal. As an example, the location information module 115 includes a Global Position System (GPS) module, a Wi-Fi module, or both. For example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module. If desired, the location information module 115 may alternatively or additionally function with any of the other modules of the wireless communication unit 110 to obtain data related to the position of the mobile terminal. The location information module 115 is a module used for acquiring the position (or the current position) and may not be limited to a module for directly calculating or acquiring the position of the mobile terminal.

The input unit 120 may be configured to permit various types of inputs to the mobile terminal 100. Examples of such inputs include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. Meanwhile, the cameras 121 may be arranged in a matrix configuration to permit a plurality of images having various angles or focal points to be input to the mobile terminal 100. Also, the cameras 121 may be located in a stereoscopic arrangement to acquire left and right images for implementing a stereoscopic image.

The microphone 122 processes an external audio signal into electric audio (sound) data. The processed audio data can be processed in various manners according to a function being executed in the mobile terminal 100. If desired, the microphone 122 may include assorted noise removing algorithms to remove unwanted noise generated in the course of receiving the external audio signal.

The user input unit 123 is a component that permits input by a user. Such user input may enable the controller 180 to control operation of the mobile terminal 100. The user input unit 123 may include one or more of a mechanical input element (for example, a mechanical key, a button located on a front and/or rear surface or a side surface of the mobile terminal 100, a dome switch, a jog wheel, a jog switch, and the like), or a touch-sensitive input element, among others. As one example, the touch-sensitive input element may be a virtual key, a soft key or a visual key, which is displayed on a touch screen through software processing, or a touch key which is located on the mobile terminal at a location that is other than the touch screen. On the other hand, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like, and generate a corresponding sensing signal. The controller 180 generally cooperates with the sending unit 140 to control operation of the mobile terminal 100 or execute data processing, a function or an operation associated with an application program installed in the mobile terminal based on the sensing signal. The sensing unit 140 may be implemented using any of a variety of sensors, some of which will now be described in more detail.

The proximity sensor 141 refers to a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this case, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like). In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data (or information) according to whether a touch with respect to a point on the touch screen is either a proximity touch or a contact touch.

A touch sensor can sense a touch (or a touch input) applied to the touch screen, such as display unit 151, using any of a variety of touch methods. Examples of such touch methods include a resistive type, a capacitive type, an infrared type, and a magnetic field type, among others.

As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched region, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 may sense which region of the display unit 151 has been touched. Here, the touch controller may be a component separate from the controller 180, the controller 180, and combinations thereof.

Meanwhile, the controller 180 may execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor may be configured to sense a touch input using a different method, in an activated or deactivated state of the display unit 151. The different method may be related to an activation period of the touch sensor. More specifically, the touch sensor may be activated at a different period according to whether the display unit 151 has been activated or not. That is, the touch sensor may have a different activation period according to whether the display unit 151 has been activated or not, and may sense a touch input applied thereto.

For instance, in a deactivated state of the display unit 151, the touch sensor may be activated with a preset period. In this instance, the preset period may be a time period more than 0. Further, in an activated state of the display unit 151, the touch sensor may be always operated in an activated state. In this instance, an activation period of the touch sensor may be '0' or a value very close to '0'.

Whether the touch sensor is in an activated state or a deactivated state may be determined based on a power consumption amount of the touch sensor. For instance, if a power consumption amount of the touch sensor is equal to or less than a preset value based on '0', it may be determined that the touch sensor is in a deactivated state. Further, if a power consumption amount of the touch sensor exceeds the preset value based on '0', it may be determined that the touch sensor is in an activated state.

If the display unit 151 is in an activated state (hereinafter, will be referred to as an active mode), the touch sensor may wait for input of taps onto the display unit 151, while maintaining an activated state. Further, if the display unit 151 is in a deactivated state (hereinafter, will be referred to as a doze mode), the touch sensor may be activated at preset periods.

When the preset period of the touch sensor is shorter, a sensing speed with respect to taps applied onto the display unit 151 is higher. However, in this instance, a power consumption amount of the touch sensor may be increased. Further, when the preset period of the touch sensor is longer, a sensing speed with respect to taps applied onto the display unit 151 may be lower, while a power consumption amount of the touch sensor is decreased.

Thus, the preset period may be set so that a sensing speed with respect to taps applied onto the display unit 151 is high enough not to be recognized by a user, and so that power consumption can be reduced. For instance, the preset period may be set so that the touch sensor in a deactivated state can be activated about 20 times (1Hz) per second.

While the display unit 151 is in an activated state, the touch sensor may be also in an activated state. In an activated state, the touch sensor may have an activation period (T) of '0' or a value very close to '0'. Alternatively, in an activated state, the touch sensor may have an activation period (T) much shorter than that set in a deactivated state of the display unit 151, by several times. That is, the touch sensor may be activated with a different period, according to whether the display unit 151 is in an activated state or a deactivated state.

In a doze mode where the display unit 151 is in a deactivated state and the touch sensor is periodically activated, if a preset touch input (e.g., a first touch input and a second touch input consecutively knocking-on a predetermined region within a predetermined time) is sensed by the touch sensor, the controller 180 can convert the doze mode into an activate mode where the flexible display unit and the touch sensor are activated.

The touch sensor may be driven at a different period based on a state of the display unit 151. For instance, when the display unit 151 is in a closed state, a doze mode may be executed. Further, when a closed state is converted into an open state, an active mode may be executed.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor.

Implementing the camera 121 with a laser sensor may allow detection of a touch of a physical object with respect to a 3D stereoscopic image. The photo sensor may be laminated on, or overlapped with, the mobile terminal. The photo sensor may be configured to scan movement of the physical object in proximity to the touch screen. In more detail, the photo sensor may include photo diodes and transistors (TR) at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

In some embodiments, the flexible display unit 151 may be implemented as a stereoscopic display unit for displaying stereoscopic images.

A typical stereoscopic display unit may employ a stereoscopic display scheme such as a stereoscopic scheme (a glass scheme), an auto-stereoscopic scheme (glassless scheme), a projection scheme (holographic scheme), or the like.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule alarm, an email reception, information reception through an application, and the like.

A signal output by the optical output module 154 may be implemented in such a manner that the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle. The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include one or more types of storage mediums including a flash memory type, a hard disk type, a solid state disk (SSD) type, a silicon disk drive (SDD) type, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 may typically control an operation associated with an application program and the general operations of the mobile terminal 100. For example, the controller 180 may set or release a lock state for restricting a user from inputting a control command with respect to applications when a status of the mobile terminal meets a preset condition.

The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various exemplary embodiments disclosed herein.

The power supply unit 190 receives external power or provide internal power and supply the appropriate power required for operating respective elements and components included in the mobile terminal 100. The power supply unit 190 may include a battery, which is typically rechargeable or be detachably coupled to the terminal body for charging.

The power supply unit 190 may include a connection port. The connection port may be configured as one example of the interface unit 160 to which an external charger for supplying power to recharge the battery is electrically connected.

As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable medium, a machine-readable medium, or similar medium using, for example, software, hardware, or any combination thereof.

Referring now to FIGS. 1B and 1C, the mobile terminal 100 is described with reference to a bar-type the body of the portable electronic device. However, the mobile terminal 100 may alternatively be implemented in any of a variety of different configurations. Examples of such configurations include watch-type, clip-type, glasses-type, or as a folder-type, flip-type, slide-type, swing-type, and swivel-type in which two and more bodies are combined with each other in a relatively movable manner, and combinations thereof. Discussion herein will often relate to a particular type of portable electronic device (for example, bar-type, watch-type, glasses-type, and the like). However, such teachings with regard to a particular type of portable electronic device will generally apply to other types of mobile terminals as well.

The body of the mobile terminal may be understood to indicate the mobile terminal 100 by regarding the mobile terminal 100 as at least one assembly.

The mobile terminal 100 will generally include a case (for example, frame, housing, cover, and the like) forming the appearance of the terminal. In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the terminal body to output information. As illustrated, a window 151a of the display unit 151 may be mounted to the front case 101 to form the front surface of the terminal body together with the front case 101.

In some embodiments, electronic components may also be mounted to the rear case 102. Examples of such electronic components include a detachable battery 191, an identification module, a memory card, and the like. Rear cover 103 is shown covering the electronic components, and this cover may be detachably coupled to the rear case 102. Therefore, when the rear cover 103 is detached from the rear case 102, the electronic components mounted to the rear case 102 are externally exposed.

As illustrated, when the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121b or an audio output module 152b.

The cases 101, 102, 103 may be formed by injection-molding synthetic resin or may be formed of a metal, for example, stainless steel (STS), aluminum (Al), titanium (Ti), or the like.

As an alternative to the example in which the plurality of cases form an inner space for accommodating components, the mobile terminal 100 may be configured such that one case forms the inner space. In this example, a mobile terminal 100 having a uni-body is formed in such a manner that synthetic resin or metal extends from a side surface to a rear surface.

If desired, the mobile terminal 100 may include a waterproofing unit (not shown) for preventing introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

The mobile terminal 100 may include a display unit 151, first and second audio output module 152a and 152b, a proximity sensor 141, an illumination sensor 142, an optical output module 154, first and second cameras 121a and 121b, first and second manipulation units 123a and 123b, a microphone 122, an interface unit 160, and the like.

Hereinafter, as illustrated in FIGS. 1B and 1C, description will be given of the exemplary mobile terminal 100 in which the front surface of the terminal body is shown having the display unit 151, the first audio output module 152a, the proximity sensor 141, the illumination sensor 142, the optical output module 154, the first camera 121a, and the first manipulation unit 123a, the side surface of the terminal body is shown having the second manipulation unit 123b, the microphone 122, and the interface unit 160, and the rear surface of the terminal body is shown having the second audio output module 152b and the second camera 121b.

However, those components may not be limited to the arrangement. Some components may be omitted or rearranged or located on different surfaces. For example, the first manipulation unit 123a may be located on another surface of the terminal body, and the second audio output module 152b may be located on the side surface of the terminal body other than the rear surface of the terminal body.

The display unit 151 outputs information processed in the mobile terminal 100. For example, the display unit 151 may display execution screen information of an application program executing at the mobile terminal 100 or user interface (UI) and graphic user interface (GUI) information in response to the execution screen information.

The display unit 151 may be implemented using one or more suitable display devices. Examples of such suitable display devices include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 may be implemented using two display devices, which can implement the same or different display technology. For instance, a plurality of the display units 151 may be arranged on one side, either spaced apart from each other, or these devices may be integrated, or these devices may be arranged on different surfaces.

The display unit 151 may also include a touch sensor which senses a touch input received at the display unit. When a touch is input to the display unit 151, the touch sensor may be configured to sense this touch and the controller 180, for example, may generate a control command or other signal corresponding to the touch. The content which is input in the touching manner may be a text or numerical value, or a menu item which can be indicated or designated in various modes.

The touch sensor may be configured in a form of a film having a touch pattern, disposed between the window 151a and a display on a rear surface of the window 151a, or a metal wire which is patterned directly on the rear surface of the window 151a. Alternatively, the touch sensor may be integrally formed with the display. For example, the touch sensor may be disposed on a substrate of the display or within the display.

The display unit 151 may also form a touch screen together with the touch sensor. Here, the touch screen may serve as the user input unit 123 (see FIG. 1A). Therefore, the touch screen may replace at least some of the functions of the first manipulation unit 123a.

The first audio output module 152a may be implemented in the form of a receiver for transferring call sounds to a user's ear and the second audio output module 152b may be implemented in the form of a loud speaker to output alarm sounds, multimedia audio reproduction, and the like.

The window 151a of the display unit 151 will typically include an aperture to permit audio generated by the first audio output module 152a to pass. One alternative is to allow audio to be released along an assembly gap between the structural bodies (for example, a gap between the window 151a and the front case 101). In this case, a hole independently formed to output audio sounds may not be seen or is otherwise hidden in terms of appearance, thereby further simplifying the appearance and manufacturing of the mobile terminal 100.

The optical output module 154 can be configured to output light for indicating an event generation. Examples of such events include a message reception, a call signal reception, a missed call, an alarm, a schedule alarm, an email reception, information reception through an application, and the like. When a user has checked a generated event, the controller 180 can control the optical output module 154 to stop the light output.

The first camera 121a can process image frames such as still or moving images obtained by the image sensor in a capture mode or a video call mode. The processed image frames can then be displayed on the display unit 151 or stored in the memory 170.

The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may also employ any non-tactile method that allows the user to perform manipulation such as proximity touch, hovering, or the like.

FIG. 1B illustrates the first manipulation unit 123a as a touch key, but possible alternatives include a mechanical key, a push key, a touch key, and combinations thereof.

Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

As another example of the user input unit 123, a rear input unit (not shown) may be located on the rear surface of the terminal body. The rear input unit can be manipulated by a user to provide input to the mobile terminal 100. The input may be used in a variety of different ways. For example, the rear input unit may be used by the user to provide an input for power on/off, start, end, scroll, control volume level being output from the first or second audio output modules 152a or 152b, switch to a touch recognition mode of the display unit 151, and the like. The rear input unit may be configured to permit touch input, a push input, or combinations thereof.

The rear input unit may be located to overlap the display unit 151 of the front side in a thickness direction of the terminal body. As one example, the rear input unit may be located on an upper end portion of the rear side of the terminal body such that a user can easily manipulate it using a forefinger when the user grabs the terminal body with one hand. Alternatively, the rear input unit can be positioned at most any location of the rear side of the terminal body.

When the rear input unit is provided at the rear surface of the terminal body, a new type of user interface using this may be implemented. Embodiments that include the rear input unit may implement some or all of the functionality of the first manipulation unit 123a in the rear input unit. As such, in situations where the first manipulation unit 123a is omitted from the front side, the display unit 151 can have a larger screen.

As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123.

The microphone 122 is shown located at an end of the mobile terminal 100, but other locations are possible. If desired, multiple microphones may be implemented, with such an arrangement permitting the receiving of stereo sounds.

The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b is shown located at the rear side of the terminal body and includes an image capturing direction that is substantially opposite to the image capturing direction of the first camera unit 121a.

The second camera 121b can include a plurality of lenses arranged along at least one line. The plurality of lenses may also be arranged in a matrix configuration. The cameras may be referred to as an "array camera." When the second camera 121b is implemented as an array camera, images may be captured in various manners using the plurality of lenses and images with better qualities.

A flash 124 is shown adjacent to the second camera 121b. When an image of a subject is captured with the camera 121b, the flash 124 may illuminate the subject.

The second audio output module 152b can be located on the terminal body. The second audio output module 152b may implement stereophonic sound functions in conjunction with the first audio output module 152a, and may be also used for implementing a speaker phone mode for call communication.

At least one antenna for wireless communication may be located on the terminal body. The antenna may be installed in the terminal body or formed by the case. For example, an antenna which configures a part of the broadcast receiving module 111 may be retractable into the terminal body. Alternatively, an antenna may be formed using a film attached to an inner surface of the rear cover 103, or a case that includes a conductive material.

A power supply unit 190 for supplying power to the mobile terminal 100 may include a battery 191, which is mounted in the terminal body or detachably coupled to an outside of the terminal body.

The battery 191 may receive power via a power source cable connected to the interface unit 160. Also, the battery 191 can be recharged in a wireless manner using a wireless charger. Wireless charging may be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. When the battery 191 is detachable from the terminal body, the rear case 103 may be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may cooperate with the display unit 151 to extend the function of the mobile terminal 100. Another example of the accessory is a touch pen for assisting or extending a touch input to a touch screen.

Hereinafter, description will be given of embodiments related to a control method which can be implemented in the mobile terminal having such configuration, with reference to the accompanying drawings. It will be obvious to those skilled in the art that the present invention can be specified into other specific forms without departing from the scope and essential features of the present invention.

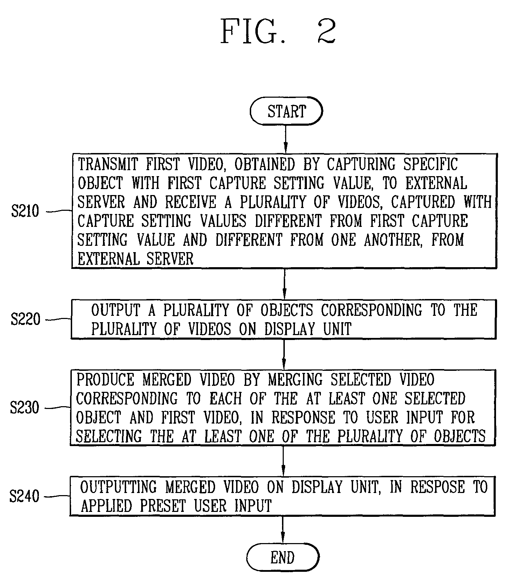

FIG. 2 is a flowchart illustrating a method for controlling a mobile terminal in accordance with the present invention.

As illustrated in FIG. 2, a step (S210) of transmitting a first video (or moving image) of a specific object, which is captured with a first capture setting value, to an external server, and receiving a plurality of videos of the specific object captured with capture setting values, which are different from one another and different from the first capture setting value, from the external server, through a wireless communication unit 110, may be carried out.

In detail, the specific object refers to a main subject of a video captured by the camera 121, and corresponds to various objects, such as a person, an animal, a building, an item and the like. The capture setting value is a value associated with a method of capturing the specific object, and may include an angle value formed with respect to the specific object, a distance value from the specific value, and the like.

The external server is a server which a plurality of terminals independently access to perform data transmission and reception, and may be set to a cloud server, a server of a website and the like. That is, the plurality of videos may be videos that a plurality of terminals different from one another have captured the same specific object, which will be described in detail later.

As another exemplary embodiment, a plurality of videos obtained by capturing a specific object may be received from an external server, without transmitting a first video to the external server. Here, the specific object may be designated by a user input.

As another exemplary embodiment, a plurality of videos obtained by capturing a specific object may also be received from terminals, which have directly captured the videos of the specific object, respectively, not from an external server. In detail, a terminal which has captured a front view of a specific object may receive a captured rear view video of the specific object from a second terminal which has captured the rear view of the specific object.

Afterwards, a step (S220) of outputting on a display unit 151 a plurality of objects corresponding to the plurality of videos may be carried out.

For example, a plurality of icons, preview images and the like, corresponding to the plurality of videos may be output on the display unit 151.

The controller 180 then generates a merged video by merging the first video with at least one selected video corresponding to at least one object, in response to a user input applied to select the at least one object from the plurality of objects (S230).

In one exemplary embodiment, when a touch input is applied to an icon A and an icon B of the plurality of icons corresponding to the plurality of videos, a merged video of a first video, videos A and B (selected videos) corresponding to the corresponding icons A and B may be produced.

Afterwards, the controller 180 outputs the merged video on the display unit 151, in response to a preset user input applied (S240).

In one exemplary embodiment, when a drag input to left is applied upon outputting a merged video, a scene that a specific object is captured at the right may be output. That is, a merged video is a video which is obtained based on capture setting values with respect to a selected video and a first video, respectively, and may also be output as a different scene according to a user input.

Hereinafter, detailed embodiments will be described.

In an embodiment, the step S230 may include producing the merged video, based on a capture setting value corresponding to each selected video and the first capture setting value corresponding to the first image.

In another exemplary embodiment, the capture setting value may include an angle value and a distance value at which the specific object has been captured.

In another exemplary embodiment, the step S230 may include producing the merged video after setting a size of the specific object included in the selected video and a size of the specific object included in the first video to the same size.

In another exemplary embodiment, the step S230 may include calculating specific angle value and distance value based on the angle value and the distance value, and producing a specific video corresponding to the specific angle value and distance value by a preset method.

In another exemplary embodiment, the step S230 may include producing the merged video by merging the specific image, the selected video and the first video.

In another exemplary embodiment, the step S230 may include producing the specific video corresponding to the specific angle value and the specific distance value by an image morphing method.

In another exemplary embodiment, the step S240 may include outputting the merged video on the display unit 151 such that at least one of.the angle value and the distance value at which the specific object has been captured changes in response to a preset user input.

In another exemplary embodiment, the step S240 may include outputting the merged video by changing a sound (or audio) value of the merged video, in response to the change in the at least one of the angle value and the distance value.

In another exemplary embodiment, the step S240 may include outputting the first video and the merged video on the display unit 151 in a simultaneous manner.

Meanwhile, the controller 180 may produce the merged video on the basis of a capture setting value corresponding to each selected video and the first capture setting value corresponding to the first video. Here, the capture setting value may include an angle value and a distance value at which the specific object has been captured.

In an exemplary embodiment, the controller 180 may produce the merged video after setting each size of the specific object included in the selected video and the first video to the same size.

In another exemplary embodiment, the controller 180 may calculate specific angle value and distance value based on the angel value and the distance value, and produce a specific video corresponding to the specific angle value and distance value by a preset method. Here, the controller 180 may produce the specific video corresponding to the specific angle value and the specific distance value by an image morphing method.

Afterwards, the controller 180 may produce the merged video by merging the specific image, the select video and the first video.

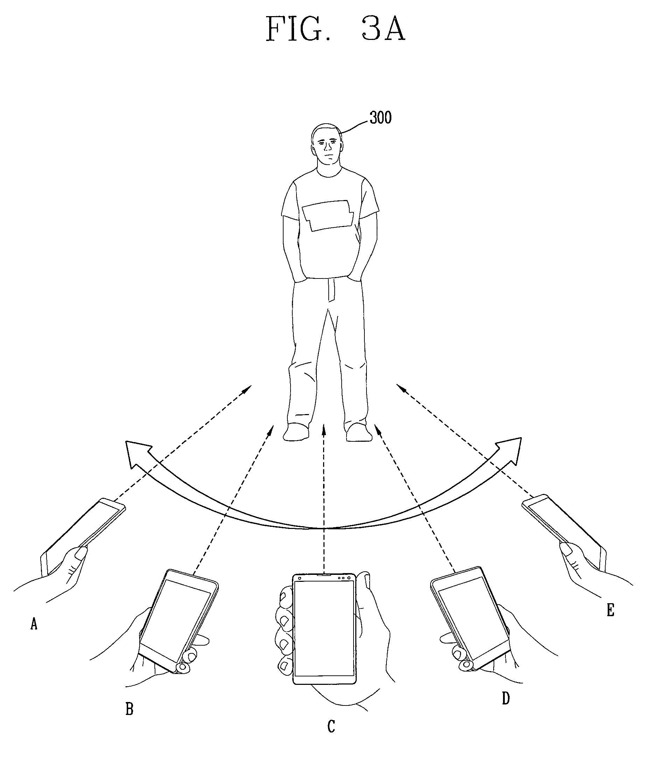

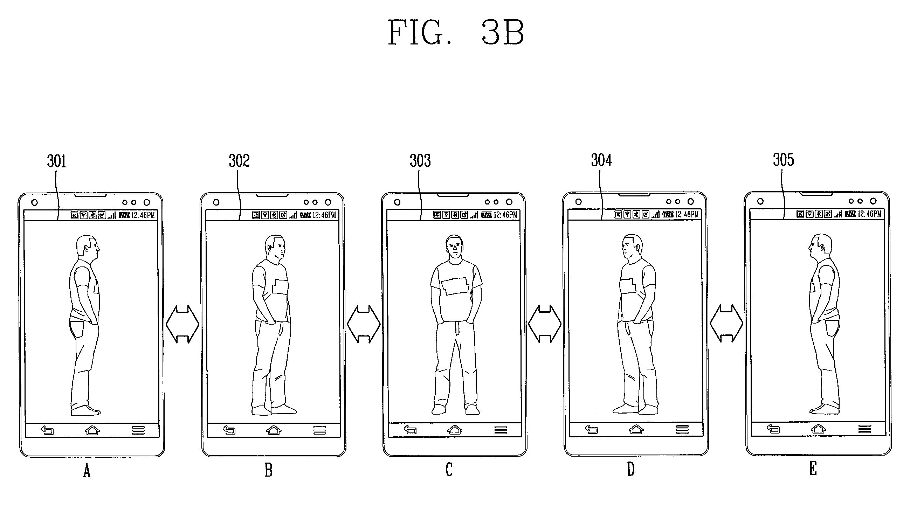

FIGS. 3A and 3B are conceptual views illustrating an exemplary embodiment of a plurality of terminals which capture the same subject at various angles.

As illustrated in FIGS. 3A and 3B, a plurality of terminals A, B, C, D and E may capture a person 300 who is a specific object in different directions. Accordingly, the terminal A may capture a right side view of the person 300, and transmit a captured video 301 to an external server.

In another exemplary embodiment, the terminal A may transmit the captured right view video 301 of the person 300 to at least one of the plurality of terminals B, C, D and E.

The terminal B may capture the person 300 at an angle between the terminal A and the terminal C, and the terminal C may capture the person 300 at the front of the person 300. Afterwards, captured videos 302 and 303 may be transmitted to the external server.

Similarly, the terminal D may capture the person 300 at an angle between the terminal C and the terminal E, and the terminal E may capture the person 300 at a left side of the person 300. Afterwards, captured videos 304 and 305 may be transmitted to the external server.

Meanwhile, when a predetermined time is spent for generation of the merged video, a screen notifying that the merged video is being generated may be output.

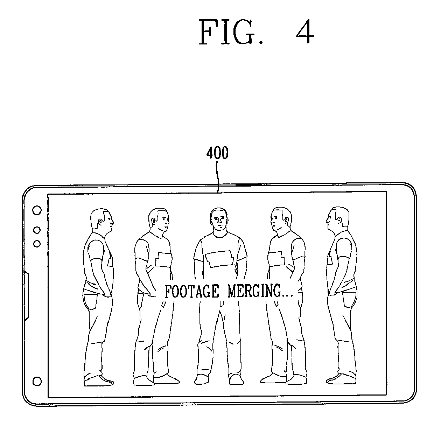

FIG. 4 is a conceptual view illustrating an exemplary embodiment of a user interface output at the moment of generating a merged video.

As illustrated in FIG. 4, each of the terminals A, B, C, D and E which have accessed the external server and transmitted the captured videos may receive videos of the person 300 captured by different terminals, and produce a merged video by merging the received videos. Here, an image 400 which indicates the process of producing the merged video may be output on each terminal A, B, C, D and E, or only on a terminal which has requested for producing the merged video.

In an exemplary embodiment, the terminal A may transmit the captured right view video 301 of the person 300 to the external server, and receive the videos 302, 303, 304 and 305 of the same person 300 captured in various directions.

The terminal A may then produce a merged video by merging the videos 301, 302, 303, 304 and 305. In this instance, there may be a non-captured section between terminals.

Hereinafter, the meaning of the non-captured section will be described in detail.

In detail, when each terminal captures a specific object at a specific angle, a capturable angle by a field of view (FOV) of a camera is limited, and thus a section without a captured video (a non-captured section) may be generated.

In an exemplary embodiment, when a capturing angle is divided into 360° based on a specific person, a capturable angle of the terminal A may be in the range of 0 to 60°, and a capturable angle of the terminal B may be in the range of 120 to 130°. Here, a section without a captured video is generated in the range of 60 to 120° based on the specific person. This section may be referred to as a non-captured section.

To generate or obtain a video corresponding to the non-captured section, various imaging methods may be applied.

In an exemplary embodiment, a distance between each terminal and a person 300 may be calculated using a depth sensor, and each video 301, 302, 303, 304 and 305 may be compensated for by being enlarged or reduced into a video captured at the same distance. Accordingly, the same size may be set for the person 300 existing in each of the captured videos.

In another exemplary embodiment, a stereoscopic camera may be used to accurately calculate a distance between each terminal and the person 300.

In another exemplary embodiment, when a depth sensor is not present, the person 300 in each of the captured videos may be set to be the same in size by an image processing, such as resizing.

Accordingly, continuous scenes corresponding to a range from a capturing angel value of the terminal A to a capturing angle value of the terminal E may be generated, and the merged video may be produced by the continuous scenes.

Meanwhile, the controller 180 may output the merged video on the display unit 151, in such a manner that at least one of the angel value and the distance value applied to capture the specific object can be changed, in response to a preset user input.

Here, the controller 180 may output the merged video by changing a sound value thereof, in response to the change in the at least one of the angle value and the distance value.

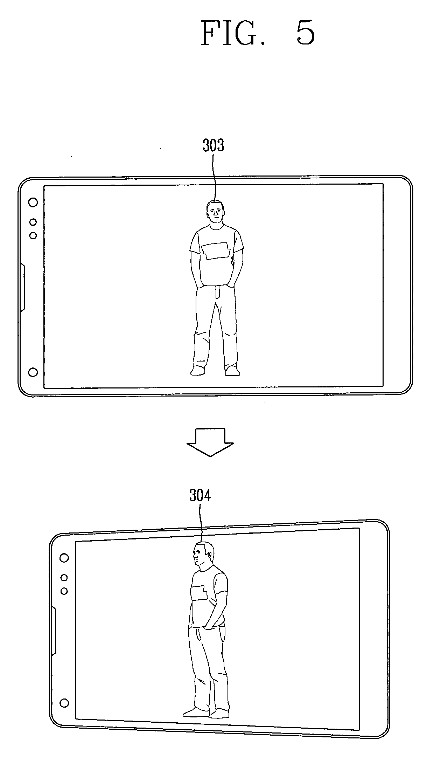

FIG. 5 is a conceptual view illustrating an exemplary embodiment of changing an output direction of a subject by applying a preset gesture.

As illustrated in FIG. 5, when a terminal is inclined to left upon reproducing (or playing) a merged video, a scene (or footage) 303 obtained by capturing a front view of the person 300 may be transitioned into a scene 304 captured between the front view and a left side view. If the terminal is inclined more to left, the scene 304 may be transitioned into a scene obtained by capturing the left side view of the person 300.

In another exemplary embodiment, when the terminal is inclined to right upon reproducing the merged video, the scene 303 obtained by capturing the front view of the person 300 may be transitioned into a scene which is captured between the front view and a right side view of the person 300. Similarly, if the terminal is inclined more to right, the output scene may be transitioned into a scene obtained by capturing a right side view of the person 300.

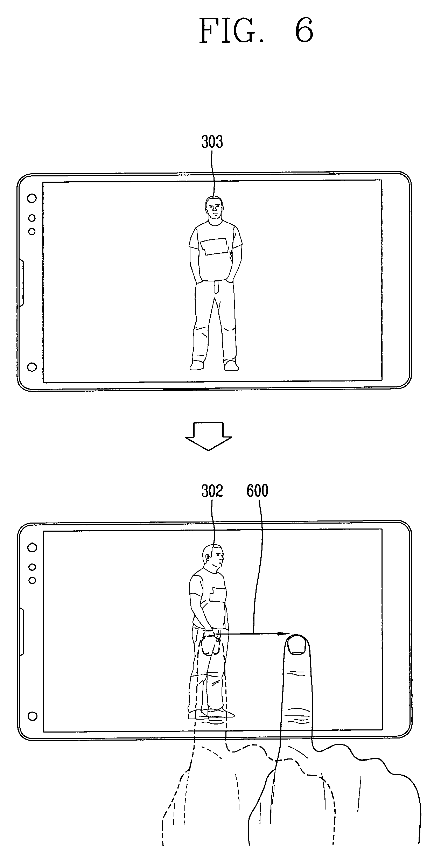

FIG. 6 is a conceptual view illustrating an exemplary embodiment of changing an output direction of a subject by applying a preset touch input.

As illustrated in FIG. 6, when a drag input 600 to right is applied to the screen 151 upon reproducing a merged video, a captured scene 303 of a front view of a person 300 may be transitioned into a scene 302 captured between the front view and a right side view of the person 300. If a degree (level or length) of the drag input to right is more increased, the output scene may be transitioned into a scene obtained by capturing the right side view of the person 300.

In another exemplary embodiment, when a drag input to left is applied to the screen 151 upon reproducing the merged video, the captured scene 303 of the front view of the person 300 may be transitioned into a video captured between the front view and a left side view. Similarly, when a degree of the drag input to left is increased, the output scene may be transitioned into a captured scene of the left side view.

In addition to the video transition, an output direction of sound (audio) may change. In an exemplary embodiment, when a scene 303 which is obtained by capturing a front view of a person 300 who is singing a song is transitioned into a scene obtained by capturing a left side view of the person 300, the song may be output more loudly through a left speaker.

Similarly, when the scene 303 obtained by capturing the front view of the singing person 300 is transitioned into a scene obtained by capturing the right side view of the person 300, the song may be output more loudly through a right speaker.

Accordingly, a user can experience the feeling like really listening to the song sung by the person 300, which is currently output.

According to the embodiments of FIGS. 5 and 6, the captured angle of the person 300 and the output direction of the sound can change according to the inclined degree and direction of the terminal and the degree and direction of the drag input applied to the screen 151.

In another exemplary embodiment, when a terminal is pulled inward or pushed outward upon reproducing a merged video, an enlarged or reduced scene of a person may be output. That is, a captured distance of the person may change according to a distance between the terminal and a user.

In addition to the scene transition, an output size (volume level) of sound may also change. In an exemplary embodiment, when an output size of the person 300 is increased or reduced, a volume level of an output song may be increased or reduced. Accordingly, a user can experience the feeling like really listening to the output song sung by the person 300.

When the scene of the merged video is transitioned, the scene transition may naturally be carried out by applying image morphing, feature comparison and the like. The user can check (or view) a figure of a subject in all directions (up, down, left and right), which may result in minutely checking even a portion which was invisible through the user's terminal.

Hereinafter, an image morphing method applicable to a terminal according to the present invention will be described in detail.

Referring back to FIG. 3A, numerous frames (videos) corresponding to continuous angle values (angles) may be present between the terminal A and the terminal B. In this instance, the videos corresponding to the continuous angle values may be used as they are, but actually-captured videos corresponding to all the continuous angle values may not exist.

In this manner, when a non-captured video is present (an actually-captured video is not present at a corresponding angle), the non-captured video can be produced using image morphing.

In an exemplary embodiment, when more than a preset number of same features are existent between a video A and a video B and captured angle values of the video A and the video B have a difference more than a preset value, a preset number of middle videos may be generated between the video A and the video B through image morphing.

In an exemplary embodiment, when there are 10 same features between the video A and the video B and the captured angle values of the video A and the video B are different from each other by more than 10°, middle videos may be generated by applying the image morphing.

In detail, when the captured angles of the video A and the video B are different from each other by more than 15°, middle videos may be generated with 5° intervals.

That is, two videos with differences of 5° and 10° from the video A may be generated as the middle videos, respectively.

In another exemplary embodiment, a video corresponding to an angle which is out of an angle between the terminal A and the terminal B may be predicted. In detail, when an angle between the terminal A and the terminal B is 5°, a video corresponding to an angle of 10° from the terminal A may be predicted.

In the meantime, as aforementioned, a three-dimensional virtual video (merged image) may be generated, but videos at every angle may be difficult to be provided. Accordingly, in an exemplary embodiment, a notification icon may be output to notify a presence of a video which is captured at a different angle at a specific time point upon reproducing a merged video. That is, a guide may be provided at a timing at which a virtual rotation is enabled.

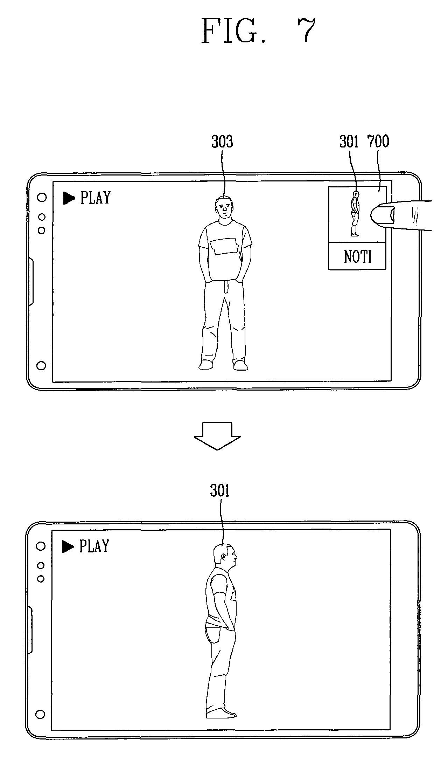

FIG. 7 is a conceptual view illustrating an exemplary embodiment of notifying a presence of a video captured in a different direction.

As illustrated in FIG. 7, when a captured scene 301 of a right side view of a person at a specific time point is present while outputting a captured scene 303 of a front view of the person upon reproducing a merged video, an icon 700 corresponding to this state may be output. For example, a thumbnail image 700 corresponding to an image preview may be output. The thumbnail image may be output in a picture-in-picture (PIP) format, and also be displayed on an output position corresponding to a specific direction.

In an exemplary embodiment, when two videos are merged with each other without applying image morphing, it is required to indicate a scene from which the merged video is present. When the captured scene 301 of the right side view of the person is present, starting from 15 minutes after reproducing the merged video, the preview icon 700 of the captured scene 301 of the right view of the person may be output.

Afterwards, when the user applies a touch input to the icon 700, videos of the captured scene 301 of the person's right side view may be continuously output.

Hereinafter, description will be given of a method of uploading a captured video on an online site, as a control method for a mobile terminal, in accordance with an exemplary embodiment of the preset invention.

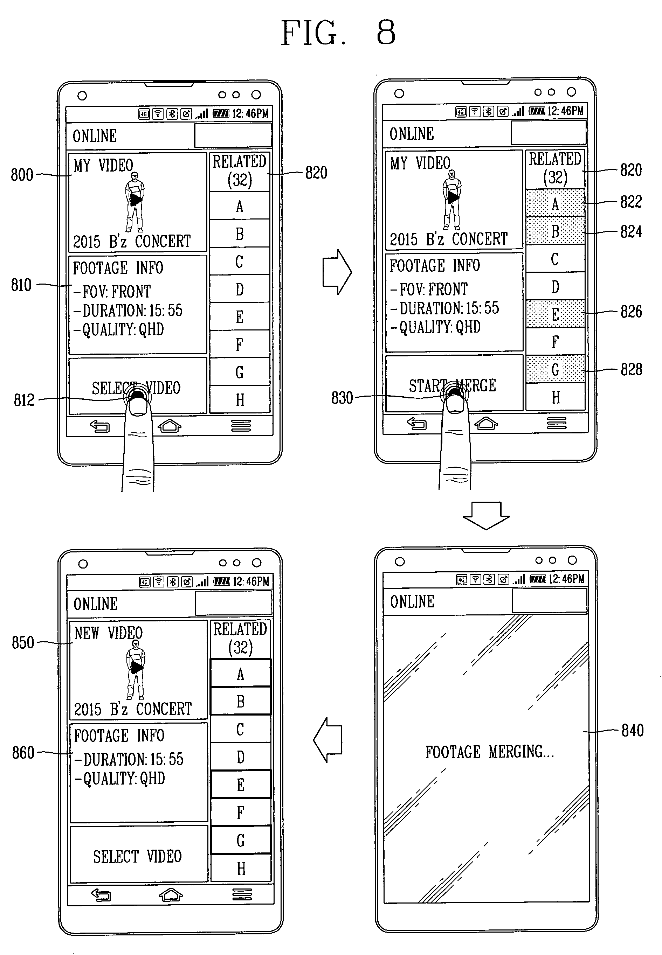

FIG. 8 is a conceptual view illustrating an exemplary embodiment of a user interface according to a method for controlling a mobile terminal in accordance with the present invention.

As illustrated in FIG. 8, when a captured video of a person 300 is transmitted to an external server, a user's video 800 captured by himself or herself may be uploaded on an online screen accessed to the external server. In addition to this, a captured direction, a video play time (duration), quality and the like all related to the person 300 may be output as scene information (footage information) related to the video 800.

Also, a plurality of videos 820 which are transmitted from external other terminals to the external server may be recommended. In detail, the plurality of videos 820 may be videos obtained by capturing the same person 300 at different angels or distances, and uploaded by the external terminals, respectively. In an exemplary embodiment, whether or not the same person 300 has been captured may be detected based on GPS information or tag information related to each terminal.

The plurality of videos 820 may be output in the form of corresponding icons, respectively. Each of the icons may be output in the form of a preview image, a thumbnail image, an icon of a user of a terminal or an online server, and the like.

In an exemplary embodiment, after applying a touch input to a video select icon 812, the terminal may select an icon 822 corresponding to a captured video by the terminal A, an icon 824 corresponding to a captured video by the terminal B, an icon 826 corresponding to a captured video by the terminal E, and an icon 828 corresponding to a captured video by the terminal G, in a manner of applying touch inputs.

Afterwards, when a touch input is applied to an icon 830 corresponding to a production of a merged video, a merged video 850 may be produced by merging the captured video by the terminal A, the captured video by the terminal B, the captured video by the terminal E, the captured video (selected video) by the terminal G, and the video 800 that has been captured and uploaded in the user's terminal. Here, a screen 840 notifying the ongoing production of the merged video 850 may be output.

Here, the merged video 850 may be generated according to various exemplary embodiments.

In an exemplary embodiment, an output state of the merged video 850 may be changed according to a user input based on uploaded videos. That is, the merged video 850 is a video having frame information (scene information) related to each uploaded image, and thus an output direction of the person may be changed in response to a user input. A related embodiment will be understood with reference to FIGS. 5 and 6.

For natural scene transition according to a user input, feature comparison, image morphing and the like may be applied. That is, a non-captured video, other than an uploaded video, may be predicted.

In another exemplary embodiment, the merged video 850 may be generated by one fixed image, irrespective of a user input. In detail, a video captured at an angle between a terminal A and a terminal B may be generated as a merged video. Such video may be a video recommended by a plurality of users.

When the production of the merged video is completed according to the embodiments, the merged video 850 and related merged video information 860 may be uploaded. Through these processes, contents information related to the specific person may be diversified.

In another exemplary embodiment, the merged video 850 may be generated based on videos exchanged by a plurality of terminals. In detail, a terminal A which has captured a front view of a person may receive a captured video of a right side view of the person from a terminal B, and receive a captured video of a left side view of the person from a terminal C. Accordingly, the merged video may be generated based on the received videos.

In another exemplary embodiment, a merged video may be generated by receiving only videos captured by external terminals. In detail, a terminal A may not capture a video of a person, but receive a captured video of a left side view of the person from a terminal B and a captured video of a left side view of the person from a terminal C. Accordingly, the merged video for the person may be generated based on the received videos.

Meanwhile, the controller 180 may output both of the first video and the merged video on the display unit 151 in a simultaneous manner.

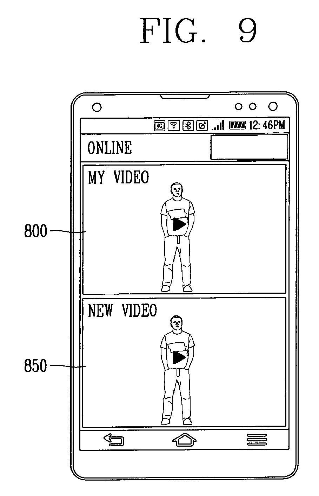

FIG. 9 is a conceptual view illustrating an exemplary embodiment of simultaneously outputting an uploaded video and a merged video.

As illustrated in FIG. 9, the user's video 800 captured by himself or herself may be output on the screen 151 along with the merged video 850 generated as illustrated in FIG. 8. Accordingly, the user can reproduce the two videos 800 and 850 in a simultaneous or sequential manner.

The mobile terminal and the control method thereof according to the present invention may provide the following effects.

In accordance with at least one exemplary embodiments of the present invention, a subject can be checked in detail at various angles and directions.

In accordance with at least one exemplary embodiments of the present invention, various videos obtained by capturing a subject may allow for providing plentiful contents associated with the subject.

Further, the present disclosure can be implemented as computer-readable codes in a program-recorded medium. The computer-readable medium may include all types of recording devices each storing data readable by a computer system. Examples of such computer-readable media may include hard disk drive (HDD), solid state disk (SSD), silicon disk drive (SDD), ROM, RAM, CD-ROM, magnetic tape, floppy disk, optical data storage element and the like. Also, the computer-readable medium may also be implemented as a format of carrier wave (e.g., transmission via an Internet). The computer may include the controller 180 of the mobile terminal. Therefore, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A mobile terminal comprising:
a camera (121);
a wireless communication unit (110);
a display (151); and
a controller (180) configured to:
capture a first video of an object using a first capture setting value;
transmit, via the wireless communication unit to an external device, the first video, wherein the external device is either a server or a terminal;
receive, via the wireless communication unit from the external device, a plurality of videos, wherein each of the plurality of videos includes the object and uses a capture setting value that is different from the first capture setting value;
generate a merged video by merging the first video and one or more of the received plurality of videos; and
cause the display to display the merged video.

2. The mobile terminal of claim 1, wherein the controller is further configured to:
generate the merged video based on the first capture setting value and the capture setting value of each of the plurality of videos.

3. The mobile terminal of claim 1 or 2, wherein the first capture setting value and the capture setting value of each of the plurality of videos comprises an angle value and a distance value at which the object has been captured.

4. The mobile terminal of claims 1 to 3, wherein the controller is further configured to:
generate the merged video after setting a size of the object included in the first video and the one or more of the received plurality of videos to a same size.

5. The mobile terminal of claims 1 to 4, wherein the controller is further configured to:
calculate a specific angle value and a specific distance value based on the first capture setting value and the capture setting value of each of the plurality of videos; and
generate the merged video based on the specific angle value and the specific distance value.

6. The mobile terminal of claims 1 to 5, wherein the controller is further configured to:
generate the merged video by merging the first video with a selected video among the plurality of videos.

7. The mobile terminal of claims 1 to 6, wherein the controller is further configured to:
generate the merged video based upon the specific angle value and the specific distance value using image morphing.

8. The mobile terminal of claims 1 to 7, wherein the controller is further configured to:
cause the display to display the merged video such that at least one of the angle value and the distance value at which the object has been captured in the first video or in one or more of the plurality of videos, is changed in response to a user input.

9. The mobile terminal of claims 1 to 8, wherein the controller is further configured to:
change a sound value of the merged video, in response to change in the angle value or the distance value, in the first video or in one or more of the plurality of videos.

10. The mobile terminal of claims 1 to 9, wherein the controller is further configured to:
cause the display to display the first video simultaneously with the displaying of the merged video.

11. A video display method for a mobile terminal having a display, the method comprising:
capturing a first video of an object using a first capture setting value;
transmitting, via a wireless communication unit (110) to an external device, the first video, wherein the external device is either a server or a terminal;
receiving, via the wireless communication unit from the external device, a plurality of videos, wherein each of the plurality of videos includes the object and uses a capture setting value that is different from the first capture setting value;
generating a merged video by merging the first video and one or more of the received plurality of videos; and
displaying on the display the merged video.

12. The method of claim 11, further comprising:
generating the merged video based on the first capture setting value and the capture setting value of each of the plurality of videos.

13. The method of claim 11 or 12, wherein the first capture setting value and the capture setting value of each of the plurality of videos comprises an angle value and a distance value at which the object has been captured.

14. The method of claims 11 to 13, further comprising:
generating the merged video after setting a size of the object included in the first video and the one or more of the received plurality of videos to a same size.

15. The method of claims 11 to 14, further comprising:
calculating a specific angle value and a specific distance value based on the first capture setting value and the capture setting value of each of the plurality of videos; and
generating the merged video based on the specific angle value and the specific distance value.
